# EUROPEAN PATENT APPLICATION

(11) **EP 4 471 918 A1**
(43) Date of publication of application: **04.12.2024**
(21) Application number: 23215816.2
(22) Date of filing: 12.12.2023
(51) Int. Cl.: H01M 10/04, H01M 10/613, A62C 3/16, A62C 37/12, H01M 10/6552

(54) **BATTERY PACK FIRE EXTINGUISHING SYSTEM**

(30) Priority: 30.05.2023 KR 20230069459
(71) Applicant: Samsung SDI Co., Ltd., Yongin-si, Gyeonggi-do 17084 (KR)
(72) Inventor: KIM, Sang Gyu, 17084 Yongin-si (KR); KIM, Won Sung, 17084 Yongin-si (KR); HWANG, Tae Sin, 17084 Yongin-si (KR); PARK, Soo Hwan, 17084 Yongin-si (KR); LEE, Ki Jai, 17084 Yongin-si (KR); EOM, Jae Pil, 17084 Yongin-si (KR); JANG, Jin Sung, 17084 Yongin-si (KR); SIM, Hye Jeong, 17084 Yongin-si (KR); KIM, Han Ho, 17084 Yongin-si (KR); AHN, Eun Young, 17084 Yongin-si (KR)
(74) Representative: Marks & Clerk LLP

(57) **Abstract**

A battery pack fire extinguishing system (600) includes:
a compressor (610) configured to compress a refrigerant;
a condenser (620) connected to the compressor (610) through a first conduit (660) and configured to condense the refrigerant;
an evaporator (630) connected to the condenser (620) through a second conduit (670) and connected to the compressor (610) through a third conduit (680), the evaporator (630) being configured to absorb ambient heat;
a battery cell (100) on the evaporator (630);
and a refrigerant injector (640) connected to the second conduit (670), above the battery cell (100), and configured to melt when vent gas is discharged from a vent hole in the battery cell (100) to inject the refrigerant into the battery cell (100).

## Description

### BACKGROUND

### 1. Field

Aspects of embodiments of the present disclosure relate to a battery pack fire extinguishing system.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute prior art.

### SUMMARY

Embodiments of the present disclosure provide a battery pack fire extinguishing system in which, when an event (e.g., a thermal event) occurs in a battery cell, cooling water from a battery pack is injected into the battery cell to lower the temperature of the battery cell and of battery cells adjacent thereto, thereby preventing heat from propagating to other, adjacent battery cells.

These and other aspects and features of the present disclosure will be described in or will be apparent from the following description of embodiments of the present disclosure.

A battery pack fire extinguishing system, according to an embodiment of the present disclosure, includes: a compressor configured to compress a refrigerant; a condenser connected to the compressor through a first conduit and configured to condense the refrigerant; an evaporator connected to the condenser through a second conduit and connected to the compressor through a third conduit, the evaporator being configured to absorb ambient heat; a battery cell on the evaporator; and a refrigerant injector connected to the second conduit, above the battery cell, and configured to melt when vent gas is discharged from a vent hole in the battery cell to inject the refrigerant into the battery cell.

The refrigerant injector may include: an injection conduit connected to the second conduit; an injection hole in a region of the injection conduit corresponding to the vent hole in the battery cell; and a sealing part blocking the injection hole. A melting point of the sealing part may be lower than a melting point of the injection conduit.

The sealing part may be configured to be melted by the vent gas of the battery cell.

The refrigerant may include a nonflammable, flame-retardant, or fire-extinguishing refrigerant.

The battery pack fire extinguishing system may further include a second battery cell below the evaporator. The evaporator may include a second refrigerant injector configured to melt when a vent gas is discharged from a vent hole in the second battery cell to inject the refrigerant into the second battery cell.

The second refrigerant injector may include: a second injection hole in a region of the evaporator corresponding to the vent hole in the second battery cell; and a second sealing part blocking the second injection hole. A melting point of the second sealing part may be lower than a melting point of the evaporator.

The second sealing part may be configured to be melted by the vent gas of the second battery cell.

The battery pack fire extinguishing system may further include: a temperature sensor for sensing a temperature of the battery cell; a control unit configured to receive temperature information of the battery cell from the temperature sensor; and a valve in the second conduit between the refrigerant injector and the evaporator and configured to be opened or closed by a control signal from the control unit. When it is determined that the temperature of the battery cell is higher than a reference value, the control unit may be configured to close the valve.

When it is determined that the temperature of the battery cell is higher than the reference value, the control unit may be configured to increase a motor rotation speed of the compressor.

At least some of the above and other features of the invention are set out in the claims.

### BRIEF DESCRIPTION OF DRAWINGS

The following drawings attached to this specification illustrate embodiments of the present disclosure to explain, together with the detailed description of the present disclosure, aspects and features of the present disclosure. Thus, the present disclosure should not be construed as being limited to the matters shown in the drawings, in which:
FIGS. 1A and 1B are a perspective view and a cross-sectional view of a battery cell;
FIG. 2 is a perspective view of a battery module;
FIGS. 3A and 3B are perspective views of a battery pack according to an embodiment of the present disclosure;
FIGS. 4A and 4B are a perspective view and a side view of a vehicle body and a body part;
FIGS. 5(A) to 5(D) illustrate a charging method of a secondary battery;
FIG. 6 is a side view of a battery module;
FIG. 7 is a side view of a water-cooled battery pack fire extinguishing system according to an embodiment of the present disclosure;
FIGS. 8A and 8B are operational diagrams showing a water-cooled battery pack fire extinguishing system according to an embodiment of the present disclosure;
FIGS. 9A and 9B are a side view and an operational diagram of a water-cooled battery pack fire extinguishing system according to an embodiment of the present disclosure; and
FIG. 10 is a block diagram describing an electrical configuration of a water-cooled battery pack fire extinguishing system according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In addition, a control unit (controller) and/or other related devices or parts according to the present disclosure may be implemented using any suitable hardware, firmware (e.g., application specific semiconductor), software, or a suitable combination of software, firmware, and hardware. For example, various components of a control unit (controller) and/or other related devices or parts according to the present disclosure may be formed on one integrated circuit chip or on a separate integrated circuit chip. In addition, various components of a control unit (controller) and/or other related devices or parts according to the present disclosure may be implemented on a flexible printed circuit film or may be formed on the same substrate as a tape carrier package, a printed circuit board, or a control unit (controller). In addition, various components of a control unit (controller) may be a process or thread running on one or more processors in one or more computing devices, which may execute computer program instructions and interact with other components to perform various functions mentioned below. The computer program instructions are stored in a memory that can be executed in a computing device using standard memory devices, such as, for example, a random access memory. The computer program instructions may also be stored on other non-transitory computer readable media, such as, for example, a CD-ROM, a flash drive, or the like. In addition, a person skilled in the art pertaining to the present disclosure will recognize that the functionality of various computing devices may be combined with each other or integrated into one computing device, or the functionality of a particular computing device may be distributed to one or more other computing devices without departing from the embodiments of the present disclosure.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, overcharge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

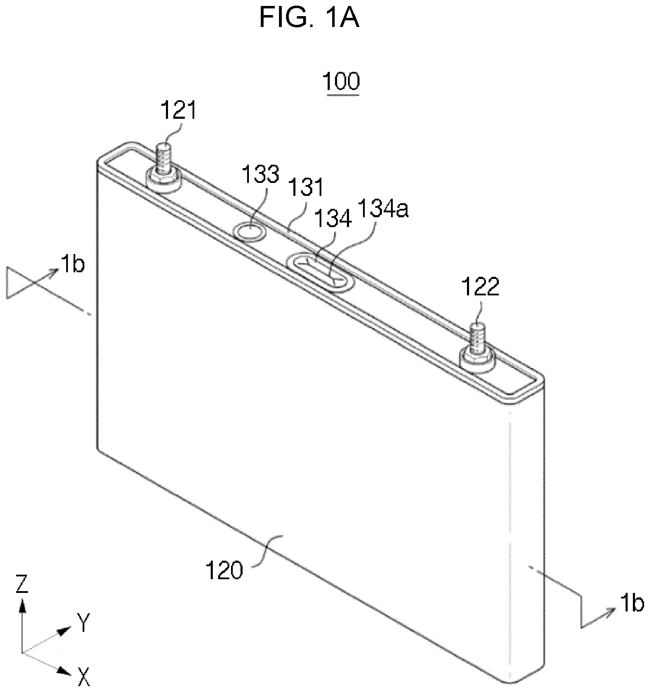

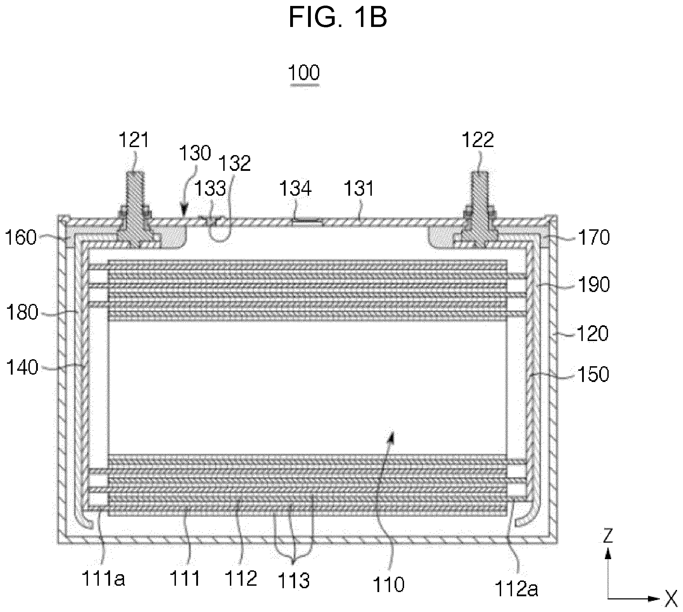

FIGS. 1A and 1B are a perspective view and a cross-sectional view of a battery cell according to an embodiment of the present disclosure. FIG. 1B is a cross-sectional view taken along the line 1b-1b of FIG. 1A.

Referring to FIGS. 1A and 1B, the secondary battery 100, according to an embodiment, may include at least one electrode assembly 110 wound with a separator 113 as an insulator between a positive electrode 111 and a negative electrode 112, a case 120 in which the electrode assembly 110 is accommodated, and a cap assembly 130 coupled to an opening of the case 120.

The secondary battery 100 will be described as a prismatic lithium ion secondary battery as an example. However, the present disclosure is not limited thereto, and the present disclosure may be applied to various types of batteries, such as lithium polymer batteries and/or cylindrical batteries.

Each of the positive electrode 111 and the negative electrode 112 may include a current collector formed of a thin metal foil having a coated portion at where an active material is applied and an uncoated portion 111a, 112a at where the active material is not coated.

The positive electrode 111 and the negative electrode 112 are wound after interposing a separator 113, which is an insulator, therebetween. However, the present disclosure is not limited thereto, and the electrode assembly 110 may have a structure in which an anode and a cathode made of a plurality of sheets are alternately stacked with a separator interposed therebetween.

The case 120 may form the overall appearance (e.g., the outer appearance) of the secondary battery 100 and may be made of a conductive metal, such as aluminium, aluminium alloy, or nickel-plated steel. The case 120 may provide a space in which the electrode assembly 110 is accommodated.

The cap assembly 130 may include a cap plate 131 covering an opening in the case 120, and the case 120 and the cap plate 131 may be made of a conductive material. Positive and negative electrode terminals 121 and 122 are electrically connected to the positive electrode 111 and the negative electrode 112 and may be installed to penetrate (or extend through) and protrude outwardly from the cap plate 131.

In addition, outer circumferential surfaces of upper pillars of the positive and negative electrode terminals 121 and 122, which protrude outwardly from the cap plate 131, may be threaded and may be fixed to the cap plate 131 by a nut.

However, the present disclosure is not limited thereto, and the positive and negative electrode terminals 121 and 122 may have a rivet structure and may be riveted or welded to the cap plate 131.

The cap plate 131 may be made of a thin plate and may be coupled to the opening in the case 120. The cap plate 131 may have an electrolyte injection port 132, into which a sealing stopper 133 may be installed, and a vent portion 134 having a notch 134a. In some embodiments, the vent portion 134 may block a vent hole (e.g., a vent opening) in the cap plate 131. In some embodiments, the vent portion 134 may be bonded or welded to the area around the vent hole (e.g., the area of the cap plate around the vent hole).

The positive and negative electrode terminals 121 and 122 may be electrically connected to current collectors including first and second current collectors 140 and 150 bonded by welding to the positive uncoated portion 111a or the negative electrode uncoated portion 112a (hereinafter referred to as positive and negative current collectors).

For example, the positive and negative electrode terminals 121 and 122 may be coupled, by welding, to the positive and negative electrode current collectors 140 and 150. However, the present disclosure is not limited thereto, and the positive and negative electrode terminals 121 and 122 and the positive and negative electrode current collectors 140 and 150 may be integrally formed.

In addition, an insulation member may be installed between the electrode assembly 110 and the cap plate 131. The insulation member may include first and second lower insulation members 160 and 170, and each of the first and second lower insulation members 160 and 170 may be installed between the electrode assembly 110 and the cap plate 131.

In addition, referring to the illustrated embodiment, one end of a separation member, which may be installed to face one side of the electrode assembly 110, may be installed between the insulation member and the positive or negative electrode terminals 121 and 122.

The separation member may include first and second separation members 180 and 190.

Therefore, first ends of the first and second separation members 180 and 190, which can be installed to face one side of the electrode assembly 110, may be installed between the first and second lower insulation members 160 and 170 and the positive and negative electrode terminals 121 and 122.

As a result, the positive and negative electrode terminals 121 and 122, which are coupled by welding to the positive and negative electrode current collectors 140 and 150, may be coupled to the first ends of the first and second lower insulation members 160 and 170 and the first and second separation members 180 and 190.

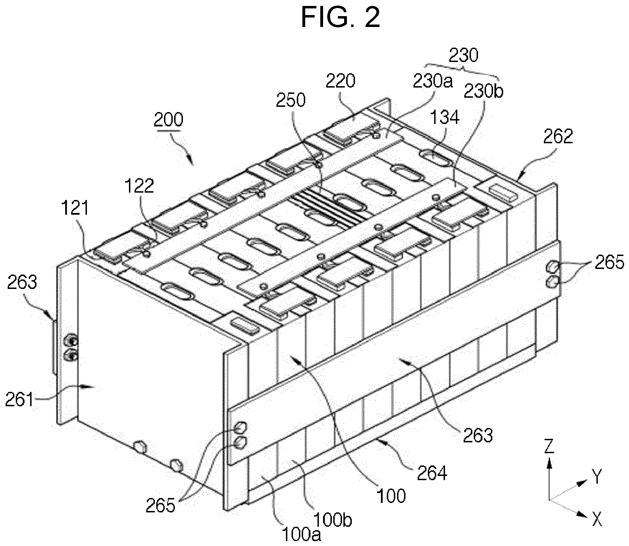

FIG. 2 is a perspective view of a battery module 200 according to an embodiment of the present disclosure. Referring to FIG. 2, the battery module 200, according to an embodiment, may include terminal parts 121 and 122, a plurality of battery cells 100 arranged in one direction, a connection tab 220 connecting a battery cell 100a to an adjacent battery cell 100b, and a protection circuit module 230 having one end connected to the connection tab 220. The protection circuit module 230 may be a battery management system (BMS). The connection tab 220 has a body portion in contact with the terminal parts 121 and 122 between the battery cells 100a and 100b that are adjacent to each other and an extension portion extending from the body portion and connected to the protection circuit module 230. The connection tab 220 may be a bus bar.

As described above, each battery cell 100 may include a case (also referred to as a battery case), an electrode assembly accommodated in the case, and an electrolyte. The electrode assembly and the electrolyte react electrochemically to generate energy. Terminal parts 121 and 122, which are electrically connected to the connection tab 220, and a vent portion 134 acting as a discharge passage for gas generated inside the case may be provided on one side of the battery cell 100. The terminal parts 121 and 122 of the battery cell 100 may be the positive electrode terminal 121 and the negative electrode terminal 122, which have different polarities from each other, and the terminal parts 121 and 122 of the adjacent battery cells 100a and 100b may be electrically connected together in series or in parallel by a connection tab 220, to be described in more detail below. Although a serial connection is described as an example, the connection structure is not limited to this structure, and various connection structures may be used. In addition, the number and arrangement of battery cells 100 is not limited to that shown in FIG. 2 and may be changed.

The plurality of battery cells 100 may be arranged in (e.g., may be stacked in) one direction so that the wide surfaces of the battery cells 100 face each other, and the plurality of battery cells 100 may be fixed by the housings 261, 262, 263, and 264. The housings 261, 262, 263, and 264 may include a pair of end plates 261 and 262 facing wide surfaces of the battery cells 100 (e.g., of the outermost battery cells 100) and a pair of side plate 263 and a bottom plate 264 connecting the pair of end plates 261 and 262. The side plates 263 may support side surfaces of the battery cells 100, and the bottom plate 264 may support a bottom surface of the battery cells 100. In addition, the pair of end plates 261 and 262, the side plates 263, and the bottom plate 264 may be connected by a member, such as a bolt 265 or the like. In some embodiments, the bottom plate 264 may include or may be referred to as a cooling plate.

The protection circuit module 230 may have electronic components and protection circuits mounted thereon and may be electrically connected to the connection tab 220, to be described later. The protection circuit module 230 includes a first protection circuit module 230a and a second protection circuit module 230b extending, at different locations on the plurality of battery cells 100, along the direction in which the plurality of battery cells 100 are arranged. In one embodiment, the first protection circuit module 230a and the second protection circuit module 230b may be spaced apart from each other at an interval (e.g., a predetermined interval) and positioned parallel to each other to be electrically connected to adjacent connection tabs 220, respectively. For example, the first protection circuit module 230a extends on one side of the upper portion of the plurality of battery cells 100 along the direction in which the plurality of battery cells 100 are arranged, and the second protection circuit module 230b extends to the other upper side of the plurality of battery cells 100 along the direction in which the plurality of battery cells 100 are arranged. The second protection circuit module 230b may be spaced apart from the first protection circuit module 230a at an interval with the vents 134 interposed therebetween and may be disposed parallel to the first protection circuit module 230a. As such, the two protection circuit modules 230a and 230b are spaced apart from each other in a side-by-side arrangement along the direction in which the plurality of battery cells 100 are arranged, thereby reducing or minimizing the area of the printed circuit board (PCB) constituting the protection circuit module 230. By separately configuring the protection circuit module 230 into two protection circuit modules 230a and 230b, an unnecessary PCB area can be omitted. In addition, the first protection circuit module 230a and the second protection circuit module 230b may be connected to each other by a conductive connection member 250. In the illustrated embodiment, one side of the connection member 250 is connected to the first protection circuit module 230a, and the other side is connected to the second protection circuit module 230b so that the two protection circuit modules 230a and 230b can be electrically connected to each other.

The connection between the connection member 250 and each of the two protection circuit modules 230a and 230b may be performed by any one of soldering, resistance welding, laser welding, or projection welding.

The connection member 250 may be, for example, an electric wire. In addition, the connection member 250 may be made of a material having elasticity or flexibility. Due to the connection member 250, it is possible to check (or measure or determine) and manage whether or not the voltage, temperature, and current of the plurality of battery cells 100 are normal. For example, the information received by the first protection circuit module 230a from connection tabs adjacent to the first protection circuit module, such as voltage, current, and temperature, and the information received from connection tabs adjacent to the second protection circuit module 230b, such as voltage, current, and temperature, may be integrated and managed by the protection circuit module through the connection member 250.

In addition, when the battery cells 100 swell (e.g., during charging), shocks or movement may be absorbed by the elasticity or flexibility of the connection member 250, thereby preventing the first and second protection circuit modules 230a and 230b from being damaged.

In addition, the shape and structure of the connection member 250 is not limited to the shape and structure shown in FIG. 2.

As described above, because the protection circuit module 230 is provided as the first and second protection circuit modules 230a and 230b, the area of the PCB constituting the protection circuit module 230 can be reduced or minimized, and the space inside the battery module 200 can be secured, which improves work efficiency by facilitating fastening attachment for connecting the connection tab 220 and the protection circuit module 230 and repair work when an abnormality is detected in the battery module 200.

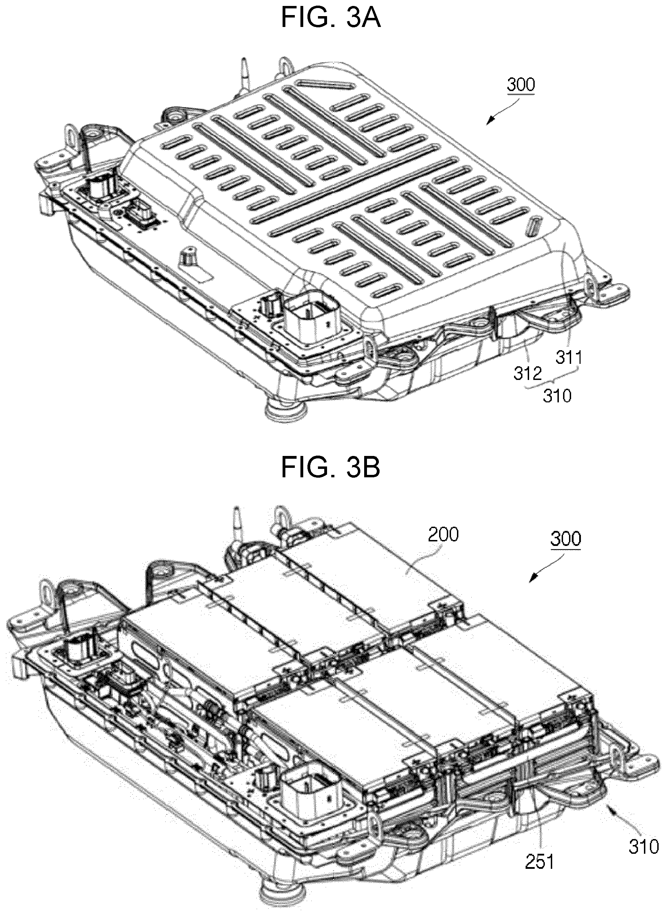

FIGS. 3A and 3B are perspective views of a battery pack 300 according to an embodiment of the present disclosure. The battery pack 300 may include a plurality of battery modules 200 and a housing 310 accommodating the plurality of battery modules 200. For example, the housing 310 may include first and second housings 311 and 312 coupled in opposite directions with the plurality of battery modules 200 therebetween. The plurality of battery modules 200 may be electrically connected to each other by using a bus bar 251, and the plurality of battery modules 200 may be electrically connected to each other in a series/parallel or series-parallel mixed method, thereby providing the desired electrical output.

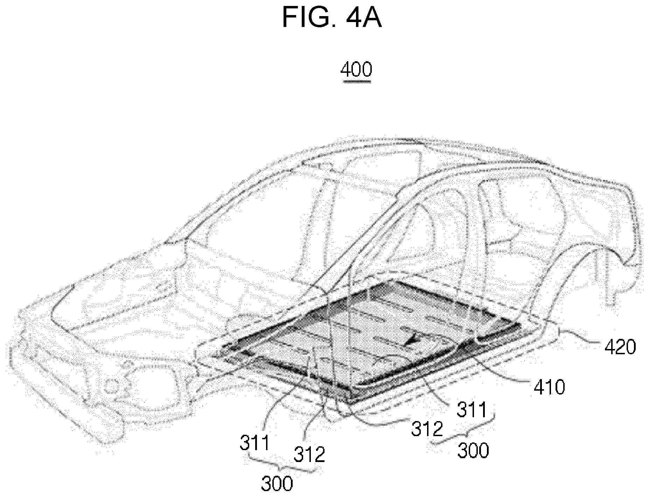

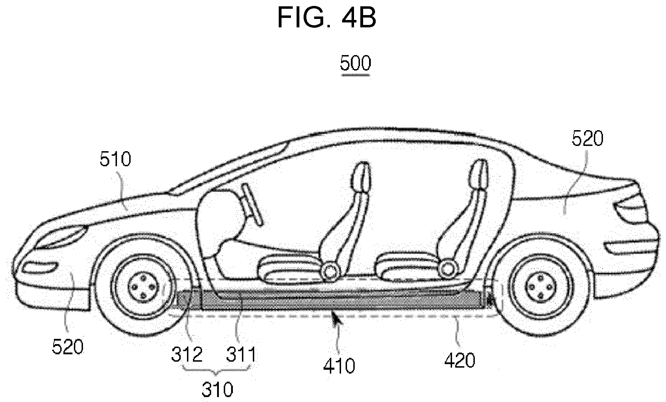

FIGS. 4A and 4B are a perspective view and a side view of a vehicle body and a body part 400 according to an embodiment of the present disclosure. Referring to FIG. 4A, the battery pack 300 may include a battery pack cover 311 (which may correspond to the first housing 311) as a part of a vehicle underbody 410, and a pack frame 312 (which may correspond to the second housing 312) disposed under the vehicle underbody 410. The battery pack cover 311 and the pack frame 312 may be integrally formed with the vehicle floor 420. The vehicle underbody 410 separates the inside and outside of the vehicle, and the pack frame 312 may be disposed outside the vehicle.

As shown in FIG. 4B, the vehicle 500 may be formed by combining additional parts, such as a hood 510 in front of the vehicle and fenders 520 respectively located in the front and rear of the vehicle, to the vehicle body 400. The vehicle 500 includes a battery pack 300 including a battery pack cover 311 and a pack frame 312, and the battery pack 300 may be coupled to the vehicle body part 400.

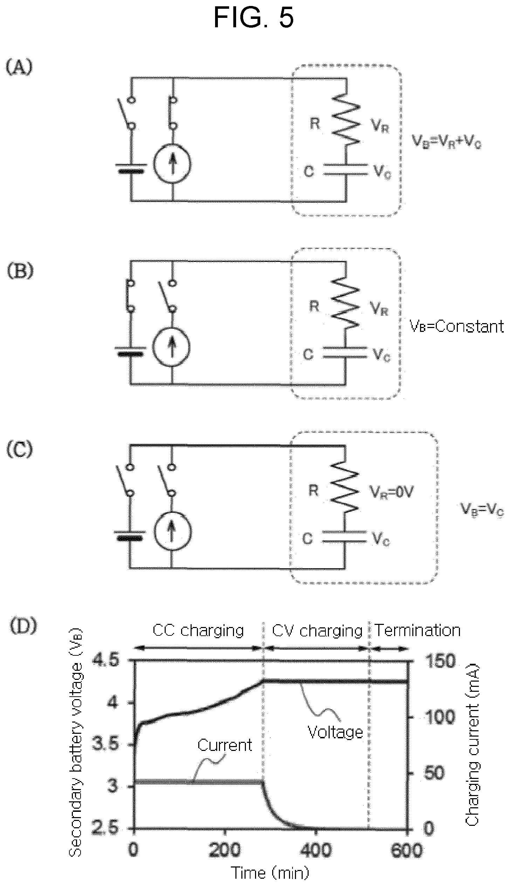

FIGS. 5(A) to 5(D) are schematic diagrams describing a charging method of a secondary battery. In some embodiments, the secondary battery may be, for example, charged and discharged by the following equation:

### <<Constant Current Constant Voltage (CCCV) charging>>

CCCV charging is a charging method in which CC (constant current) charging is performed until the voltage reaches a reference (or predetermined) voltage, and then constant voltage (CV) charging is performed until the amount of current flowing decreases, specifically, until an end current value.

During CC charging, as shown in FIG. 5(A), a switch of a constant current power supply is turned on, and a switch of a constant voltage power supply is turned off so that a constant current I flows through the secondary battery. During this period, because the current I is constant, a voltage V_{R} applied to an internal resistor R is also constant according to the Ohm's law (V_{R}=R×I). A voltage Vc applied to a secondary battery capacitor C increases over time. Therefore, a secondary battery voltage V_{B} may rise over time.

When the secondary battery voltage V_{B} reaches the reference (or predetermined) voltage, for example, about 4.3 V, CC charging is switched to CV charging. During CV charging, as shown in FIG. 5(B), the switch of the constant voltage power supply is turned on, and the switch of the constant current power supply is turned off so that the secondary battery voltage V_{B} is constant. The voltage Vc applied to the secondary battery capacitor C increases over time. Because V_{B} = V_{R} + Vc is satisfied, the voltage V_{R} applied to the internal resistor R decreases over time. As the voltage V_{R} applied to the internal resistor R decreases, the current I flowing through the secondary battery may also decrease according to the Ohm's law (V_{R}=R×I).

When the current I flowing through the secondary battery reaches a reference (or predetermined) current, for example, about 0.01 mA, charging is terminated. When CCCV charging is finished, all switches are turned off and the current I becomes 0, as shown in FIG. 5(C). Therefore, the voltage V_{R} applied to the internal resistor R becomes 0 V. However, the voltage V_{R} applied to the internal resistor R is sufficiently reduced by CV charging. Accordingly, even if no voltage drop occurs across the internal resistor R, the secondary battery voltage V_{B} does not (or does not materially) decrease.

FIG. 5(D) shows an example of a secondary battery voltage V_{B} and charging current during CCCV charging and after CCCV charging is terminated. Even after CCCV charging is terminated, the secondary battery voltage V_{B} does not decrease.

In some embodiments, to provide a high energy density, the secondary battery may be used as a battery module provided with, for example, a plurality of unit battery cells connected together in series and/or parallel. For example, to implement a high-output secondary battery having a desired amount of power, the battery module may be provided by interconnecting electrode terminals of a plurality of unit battery cells. In addition, a plurality of battery modules connected together in series and/or parallel may also be referred to as a battery pack.

The battery module may be implemented in a block or modular manner. In the block-type implementation, each battery cell may be coupled to a common current collector structure and a common battery management system. In the modular implementation scheme, a plurality of battery cells may be connected together to provide a sub-module, and a plurality of sub-modules may be connected together to provide a battery module. The battery management function may be implemented at a module or sub-module level, and accordingly, component compatibility may be improved. To construct a battery system, one or more battery modules may be mechanically and electrically integrated, equipped with a thermal management system, and set up for communication with one or more electrical consumers.

Mechanical integration of battery modules may be implemented by providing cooling plates and individually positioning battery cells or sub-modules thereon. Fixing the battery cells or sub-modules may be achieved by mechanical interconnects, such as bolts or screws or depressions in the cooling plate. In some embodiments, the cell or sub-module may be limited to securing the side plate to the side of the cooling plate.

A thermal management system may be included to provide thermal control of a battery pack to safely use at least one battery module by efficiently radiating, emitting, and/or dissipating heat generated from the secondary battery. If heat radiation/emission/dissipation is not sufficiently performed, a temperature deviation may occur between the respective battery cells so that at least one battery module no longer generates a desired amount of power. In addition, an increase in internal temperature may cause an abnormal internal reaction, thereby deteriorating charging and discharging performance of the secondary battery and shortening its lifespan. Therefore, cell cooling may be provided to efficiently radiate, emit, and dissipate heat generated in the cell.

Thermal runaway is an example of an abnormal operating condition of a battery cell, which can be reached by a lithium ion battery cell that is overheated or overcharged. The critical temperature for entering thermal runaway is approximately 150 °C or higher, and heat may propagate from a battery cell with poor electrical contact or a short circuit to another adjacent cell. Thermal runaway may be a self-accelerating chemical reaction inside a cell. The thermal runaway generates large amounts of heat and gases until all available materials are consumed, during which defective cells can heat up to cell temperatures of approximately 700 °C or higher and release large amounts of hot gas into the system. Generally, a battery cell may include a vent hole through which vent gas is discharged when the pressure inside the battery exceeds a reference pressure. Typically, for a cell case having a high energy density (e.g., approximately 200 wh/kg), the discharged vent gas may have a temperature of approximately 500 °C and a gas velocity of approximately 300 m/s.

During thermal runaway, a large amount of heat may be propagated to adjacent cells by the vent gas. These cells are already heated by a failed cell due to heat conduction through the side plate, base plate, and/or electrical connectors thereof, and thus, may be prone to thermal runaway. The result can be thermal runaway propagation throughout the entire cell system and cell fire.

Generally, a battery system may include a fire extinguishing system that is started when the cell temperature exceeds a certain threshold. The actuator for initiating the fire extinguishing system may include a melting fuse member configured to be decomposed at a temperature threshold or higher. The actuator is usually arranged close to or immediately adjacent to the battery cells, so that there is a high risk of false start-up of the fire extinguishing system. Most fire extinguishing systems operate irreversibly and/or may be fluid extinguishing systems. Thus, a false start-up may result in irreversible damage to an operating battery system and/or may necessitate replacement of the fire extinguishing system. Conventional fire extinguishing systems require significant additional installation space and add a lot of extra weight to the battery system, which may reduce energy efficiency.

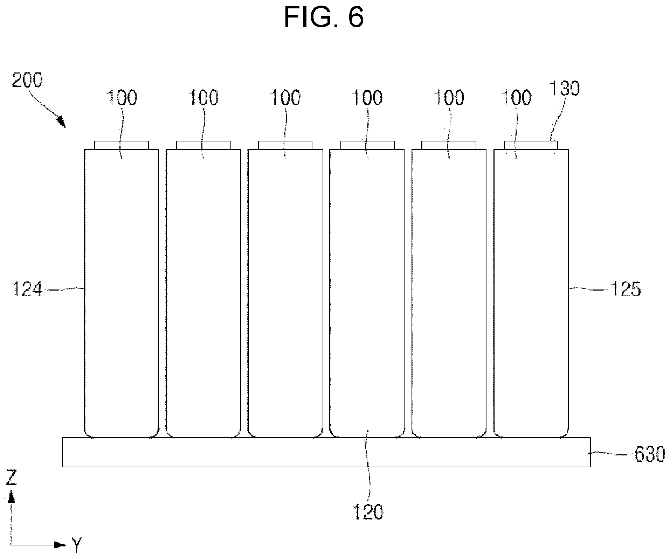

FIG. 6 is a side view of a battery module 200 according to an embodiment of the present disclosure. In the embodiment shown in FIG. 6, the battery module 200 may include a plurality of battery cells 100 aligned and arranged in a first direction, for example, a Y-direction. In some embodiments, each of the battery cells 100 may be a prismatic (or rectangular) cell 100, and wide flat sidewalls 124 and 125 of the cells 100 may be stacked together to provide a battery module 200. In some embodiments, battery cells 100 may be arranged so that sidewalls 124 and 125 of adjacent battery cells 100 face each other and/or are in close contact with each other. A spacer made of an organic material and/or an inorganic material for slowing or preventing heat propagation may be positioned between the sidewalls 124 and 125 of the adjacent cells 100. The positive and negative electrode terminals 121 and 122 of adjacent battery cells 100 may be electrically connected through a bus bar. By electrically connecting a plurality of battery cells 100 together as a bundle, the battery module 200 may be used as a power supply device. Furthermore, the plurality of battery modules 200 may be electrically connected together to form a battery pack, which may be used as a power supply device.

Each of the battery cells 100 may include a vent portion 134 (see, e.g., FIG. 1A) disposed in the cap assembly 130 of the battery cell 100 at a distance from (e.g., spaced from) the positive electrode terminal 121 and the negative electrode terminal 122. The vent portions 134 of the plurality of battery cells 100 arranged in the first direction may also be arranged in the first direction. In addition, the plurality of battery cells 100 may be disposed on a cooling plate 630 to support the weight of the battery cells 100 and to cool the plurality of battery cells 100. In some embodiments, the cooling plate 630 may include or may be referred to as an evaporator. Hereinafter, the cooling plate will be referred to as an evaporator. In addition, the cooling plate described herein may be the same as or similar to the bottom plate or cooling plate 264 shown in, for example, FIG. 2.

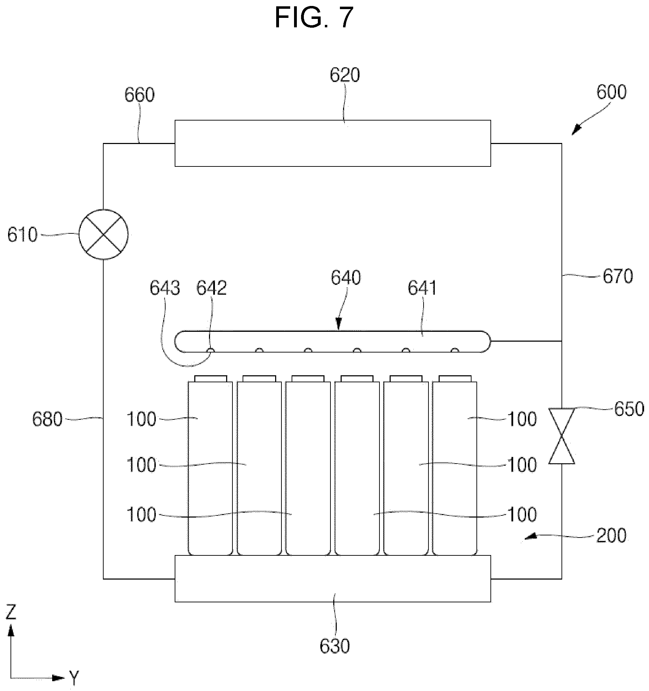

FIG. 7 is a side view of a water-cooled battery pack fire extinguishing system 600 according to an embodiment of the present disclosure. In the embodiment shown in FIG. 7, the battery pack fire extinguishing system 600 includes a compressor 610, a condenser 620, an evaporator 630, and a refrigerant injector 640.

The compressor 610 may include a motor and a compression pump, which compresses a high-temperature refrigerant, received from the evaporator 630 through a third conduit 680, to a high pressure and discharges the refrigerant through a first conduit 660. In some embodiments, the refrigerant may include a nonflammable, flame-retardant and/or fire-extinguishing refrigerant. In some embodiments, the refrigerant may include R22 (chlorodifluoromethane (CHClF₂)), R410A (composed of R32 and R125 in a mass fraction of 50% each, R32 being difluoromethane (CH₂F₂) and R125 being pentafluoroethane (CF₃CHF₂)), and/or carbon dioxide. In some embodiments, the refrigerant may include a mixed refrigerant of R32, R125, and R13I1 (CF₃I). All of these materials can cool the battery cell 100 by satisfying the characteristics of a refrigerant and may have nonflammable, flame-retardant, and/or fire-extinguishing properties, thereby suppressing thermal runaway and fire of the battery cell 100.

The condenser 620 is connected to the compressor 610 through the first conduit 660 to receive high-temperature and high-pressure refrigerant. The condenser 620 may be bent multiple times to have a relatively long length and may also include a plurality of heat dissipation fins provided on the surface. Accordingly, the condenser 620 may provide a liquefied refrigerant by releasing heat from the high-temperature and high-pressure refrigerant. The liquefied refrigerant may be provided to the evaporator 630 and the refrigerant injector 640 through a second conduit 670.

The evaporator 630 is connected to the condenser 620 through the second conduit 670 to absorb ambient heat and discharge the refrigerant that has absorbed the heat through the third conduit 680. The evaporator 630 may also be bent multiple times to have a relatively long length. In some embodiments, as described above, the evaporator 630 may include or may be referred to as a cooling plate and may be provided in a substantially rectangular parallelepiped case.

As described above, the battery cell 100 may be implemented in the form of a battery module 200 and positioned on the evaporator 630. As an example, a plurality of battery cells 100 are arranged in the first direction (e.g., the Y-direction) to form the battery module 200, and the battery module 200 may be located on the evaporator 630. Accordingly, heat generated from the battery module 200, that is, the battery cells 100, may be absorbed by the evaporator 630.

The refrigerant injector 640 is connected to the second conduit 670 and is positioned on the battery cell 100, that is, on the battery module 200. Thus, when the high-temperature and high-pressure vent gas is discharged from the vent portion 134 of the battery cell 100 (which is referred to as occurrence of an event, in some examples), a partial region of the refrigerant injector 640 may be melted to inject the refrigerant into the battery cell 100.

In some embodiments, the partial region of the refrigerant injector 640 corresponding to the battery cell 100 at where the event has occurred may be melted so that the refrigerant can be injected only into the battery cell 100 where the event has occurred. Therefore, the temperature of the battery cell 100 where the event has occurred may be lowered, and accordingly, heat may not propagate to other normal battery cells 100 adjacent to the battery cell 100 where the event has occurred. In other words, the thermal runaway phenomenon may not be transmitted to other cells adjacent to the cell where the event has occurred.

In some embodiments, one end of the refrigerant injector 640 is connected to the second conduit 670 and the other end thereof is blocked. That is, when a cooling operation of the battery cell 100 is performed, the refrigerant does not flow through the refrigerant injector 640 but remains stationary. Accordingly, because the length of the cooling passage of the entire system is minimized, a pressure drop due to the length of the cooling passage may be prevented during a cooling operation. Accordingly, the length of the cooling passage of the entire system can be minimized, thereby preventing a pressure drop due to the length of the cooling passage during a cooling operation.

In some embodiments, a valve 650 may be installed in a partial region of the second conduit 670 between the refrigerant injector 640 and the evaporator 630. In some embodiments, when an event occurs in the battery cell 100, the valve 650 may be closed. Accordingly, the refrigerant may not be transferred from the condenser 620 to the evaporator 630 but may be entirely discharged to the battery cell 100 through the refrigerant injector 640. In some embodiments, the valve 650 may include or may be referred to as an expansion valve that delivers an appropriate amount of refrigerant to the evaporator 630.

In some embodiments, when an event occurs in the battery cell 100, and according to an electrical signal of the sensor that detects the event, the motor rotation speed of the compressor 610 may be controlled to be increased, and accordingly, a relatively large amount of coolant (or refrigerant) is moved. Through the refrigerant injector 640, the refrigerant can be injected more quickly into the battery cell 100 where the event occurred. In some embodiments, event detection sensors may include temperature sensors, smoke detection sensors, or flame detection sensors.

In some embodiments, the battery modules 200 may be further arranged to be spaced apart in the second direction, for example, in the X-direction. Accordingly, the refrigerant injector 640 may also be spaced apart in the second direction and may be positioned on the battery module 200. In some embodiments, a plurality of battery modules 200 may also be referred to as a battery pack.

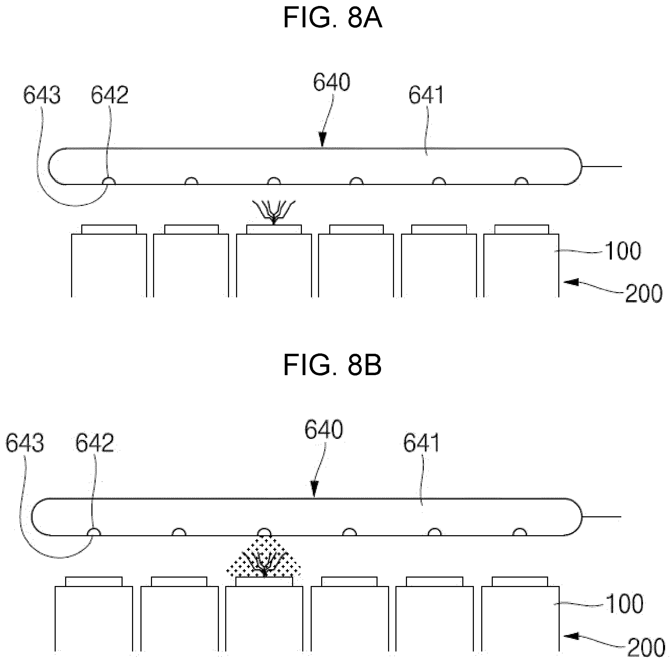

FIGS. 8A and 8B are operational diagrams showing a battery pack fire extinguishing system 600 according to an embodiment of the present disclosure. FIG. 8A shows a state in which vent gas is discharged through the vent of a battery cell 100, and FIG. 8B shows a state in which a partial region of the refrigerant injector 640 corresponding to the vent gas is melted to directly inject the refrigerant into the vent of the battery cell 100. In the example shown in FIGS. 8A and 8B, the refrigerant injector 640 may include an injection conduit 641, an injection hole (e.g., an injection opening) 642, and a sealing part 643.

One end of the injection conduit 641 may be connected to the second conduit 670, and the other end thereof may be blocked. The injection conduit 641 may have a shape of a circular pipe or a square pipe. The injection conduit 641 may be positioned substantially parallel to the longitudinal direction (e.g., the Y-direction) of the battery module 200 on the battery module 200. In some embodiments, the longitudinal direction of the injection conduit 641 may be similar to or the same as the arrangement direction (e.g., the Y-direction) of the vent portion 134 of the battery cell 100. In some embodiments, the length of the injection conduit 641 may be similar to or equal to the length of the battery module 200 (e.g., the Y-direction length). The injection conduit 641 may be made of aluminium, copper, stainless steel, or resin.

The injection hole 642 may be provided in a partial region of the injection conduit 641 corresponding to the vent portion 134 of the battery cell 100. In some embodiments, the shape of the injection hole 642 may correspond to the shape of the vent portion 134. For example, when the shape of the vent portion 134 is circular, the shape of the injection hole 642 may also be circular, and when the shape of the vent portion 134 is oval, the shape of the injection hole 642 may also be oval. In some embodiments, the size of the injection hole 642 may be similar to or equal to the size of the vent portion 134. In some embodiments, the injection hole 642 may include or be referred to as an injection nozzle.

The sealing part 643 may block the injection hole 642. In some embodiments, the sealing part 643 may be coated on or adhered to the injection conduit 641 to block the injection hole 642. The sealing part 643 may include or may be referred to as a film, a tape, or a plug coupled to the injection hole 642.

In some embodiments, the melting point of the sealing part 643 may be lower than that of the injection conduit 641. In some embodiments, the sealing part 643 may be melted by the vent gas of the battery cell 100. In some embodiments, the sealing part 643 may include polyethylene (PE), polypropylene (PP), polystyrene (PS), acrylonitrile butadiene styrene (ABS) copolymer resin, acrylonitrile styrene (AS) copolymer resin, methacrylic resin (PMMA), polyvinyl alcohol (PVA), or polyvinyl chloride (PVC).

In some embodiments, the melting temperature of the sealing part 643 may be approximately 150 °C. Accordingly, when the temperature of the vent gas exceeds approximately 150 °C, the sealing part 643 may melt. As such, when the sealing part 643 melts, the injection hole 642 opens, and accordingly, the refrigerant in the injection conduit 641 is injected through the vent portion 134 of the battery cell 100 through the injection hole 642.

As described above, the location of the injection hole 642 is provided in a region of the injection conduit 641 corresponding to the location of the battery cell 100 (e.g., the location of the vent portion 134) so that the battery cell 100 where the event has occurred may directly receive the refrigerant. The refrigerant may be injected into the corresponding battery cell 100 only through the injection hole 642 corresponding to the battery cell 100. Therefore, heat is not transmitted to other battery cells 100 adjacent to the battery cell 100 where the event has occurred.

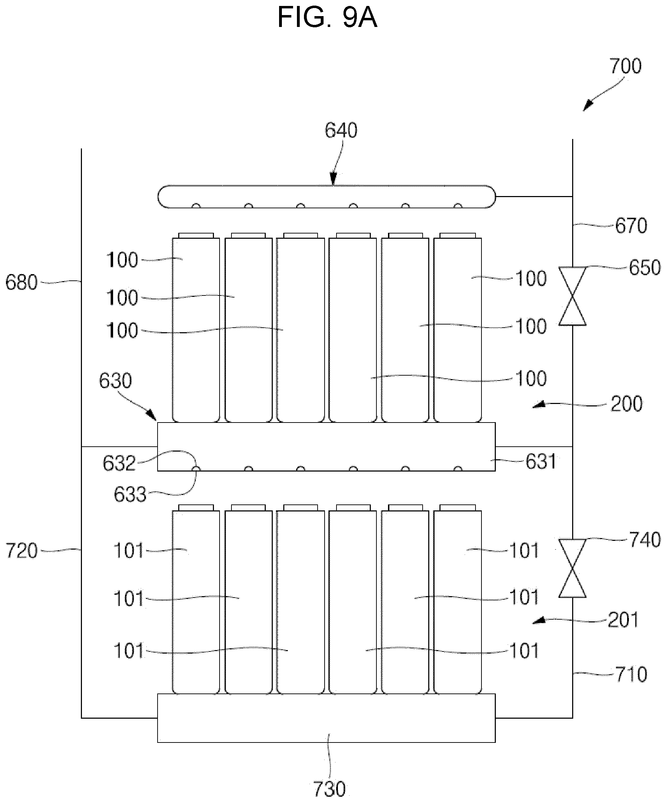

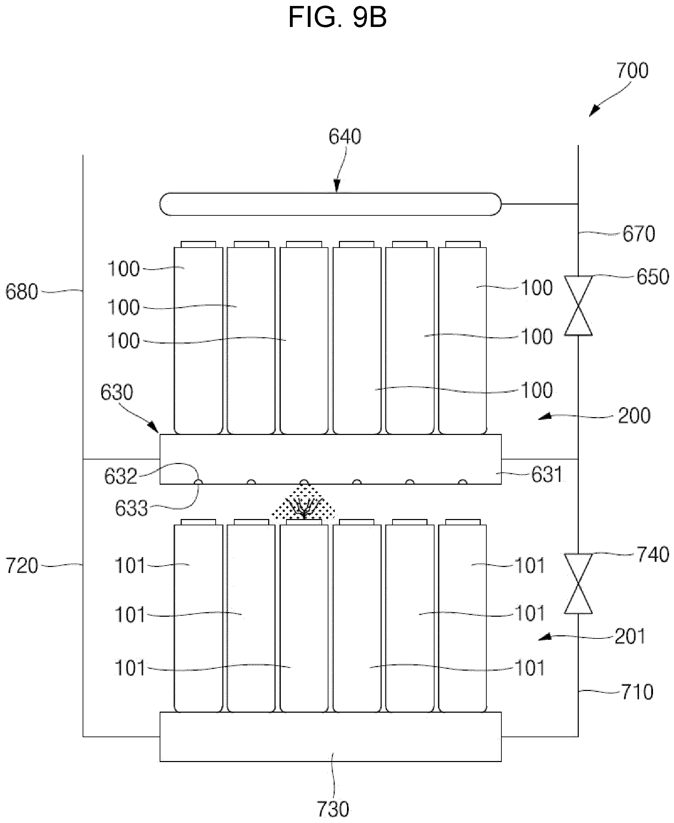

FIGS. 9A and 9B are a side view and an operational diagram of a water-cooled battery pack fire extinguishing system 700 according to an embodiment of the present disclosure. In the embodiment shown in FIGS. 9A and 9B, the battery pack fire extinguishing system 700 may further include second battery cells 101 located below the evaporator 630, for example, a second battery module 201. In addition, the evaporator 630 may include a second refrigerant injector 631 that melts when vent gas is discharged from the vent portion 134 of the second battery cell 101 and injects the refrigerant into the second battery cell 101.

In one embodiment, the second refrigerant injector 631 may include a second injection hole (e.g., a second injection opening) 632 provided in a portion of the evaporator 630 corresponding to the vent portion 134 of the second battery cell 101, and a second sealing part 633 blocking the second injection hole 632. The melting point of the second sealing part 633 may be lower than that of the evaporator 630. The second sealing part 633 may be melted by the vent gas of the second battery cell 101. Compared to the refrigerant injector 640, the second refrigerant injector 631 may be similar to or the same as the structure of the refrigerant injector 640, except for being provided directly to the evaporator 630. In some embodiments, the second battery module 201 may be located on a second evaporator 730, and the second evaporator 730 may be connected to the second conduit 670 through a fourth conduit 710 and to the third conduit 680 through a fifth conduit 720. In some embodiments, a second valve 740 may be installed in the fourth conduit 710, and the second valve 740 may be closed when the second refrigerant injector 631 operates. FIG. 9B shows an operating state of the second refrigerant injector 631.

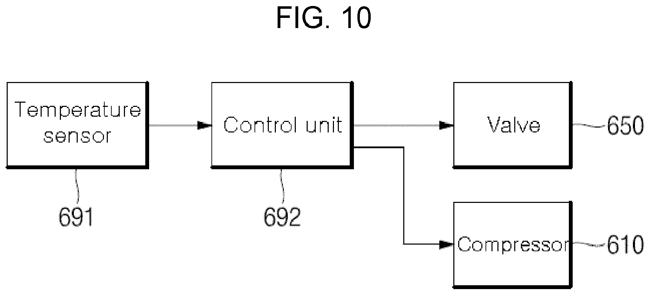

FIG. 10 is a block diagram describing an electrical configuration of a battery pack fire extinguishing system 600 according to an embodiment of the present disclosure. In the embodiment described with respect to FIG. 10, the battery pack fire extinguishing system 600 may include a temperature sensor 691, a control unit 692, a valve 650, and a compressor 610.

The temperature sensor 691 may sense the temperature of the battery cell 100 and may transmit temperature information to the control unit 692. In some embodiments, the temperature sensor 691 may be installed one by one in each battery module 200 or one by one in each battery cell 100. In some embodiments, the temperature sensor 691 may be installed around the vent portion 134.

The control unit 692 may receive temperature information of the battery cell 100 from the temperature sensor 691 and may perform various control operations on the basis of the received temperature information.

The valve 650 may be installed in a region of the second conduit 670 between the refrigerant injector 640 and the evaporator 630, and thus, may be opened or closed by a control signal from the control unit 692. In some embodiments, the valve 650 may include an electronic valve that may be opened or closed by an electronic signal.

The compressor 610 may be installed between the first conduit 660 and the third conduit 680 and, thus, may determine the flow rate of the refrigerant by the control signal from the control unit 692. In some embodiments, the control unit 692 may control the motor rotation speed of the compressor 610.

In some embodiments, when it is determined that the temperature of the battery cell 100 is higher than a reference value, the control unit 692 may close the valve 650 so that the refrigerant may be all sprayed into the battery cell 100 through the refrigerant injector 640 without being transferred from the condenser 620 to the evaporator 630.

In some embodiments, when it is determined that the temperature of the battery cell 100 is higher than the reference value, the control unit 692 may increase the motor rotation speed of the compressor 610, thereby allowing a relatively large amount of refrigerant to be injected into the battery cell 100 through the refrigerant injector 640 within a short time. This operation may be performed independently or together with the closing operation of the valve 650.

In some embodiments, the valve 650 may further include a temperature sensitive valve. In some embodiments, when the ambient temperature is higher than the reference value, the valve 650 may be closed in response thereto without a control signal of the control unit 692. Accordingly, when a higher pressure is applied to the injection conduit 641 and the pressure exceeds a reference value, the injection hole 642 may be opened as the sealing part 643 ruptures. Therefore, even if the vent gas is not discharged from the battery cell 100, the refrigerant may be automatically supplied to the battery module 200 when the temperature of the battery module 200, that is, the ambient temperature of the valve 650, exceeds the reference value.

According to embodiments of the present disclosure, a battery pack fire extinguishing system may be provided in which, when an event occurs in a battery cell, coolant (e.g., a refrigerant and/or cooling water) from a battery pack is injected into the battery cell to lower the temperatures of the battery cell and battery cells adjacent thereto, thereby preventing heat from propagating to battery cells adjacent to the battery cell experiencing the event.

However, aspects and features of the present disclosure are not limited to those described above, and other aspects and features not mentioned herein will be clearly understood by a person skilled in the art from the description of the present disclosure, described above, and the claims, provided below.

Although the present disclosure has been described with respect to some embodiments thereof, the present disclosure is not limited thereto. Various modifications and variations can be made to the described embodiments by a person skilled in the art to which the present disclosure belongs within the scope of the present disclosure, the claims, and their equivalents.

### Explanation of Some Reference Symbols

| | | | |
|---|---|---|---|
| 100: | Battery cell | 200: | Battery module |
| 600: | Battery pack fire extinguishing system | 610: | Compressor |
| 620: | Condenser | 630: | Evaporator |
| 640: | Refrigerant injector | 641: | Injection conduit |
| 642: | Injection hole | 643: | Sealing part |
| 650: | Valve | 660: | First conduit |
| 670: | Second conduit | 680: | Third conduit |

## Claims

1. A battery pack fire extinguishing system comprising:
a compressor configured to compress a refrigerant;
a condenser connected to the compressor through a first conduit and configured to condense the refrigerant;
an evaporator connected to the condenser through a second conduit and connected to the compressor through a third conduit, the evaporator being configured to absorb ambient heat;
a battery cell on the evaporator; and
a refrigerant injector connected to the second conduit, above the battery cell, and configured to melt when vent gas is discharged from a vent hole in the battery cell to inject the refrigerant into the battery cell.

2. The battery pack fire extinguishing system as claimed in claim 1, wherein the refrigerant injector comprises:
an injection conduit connected to the second conduit;
an injection hole in a region of the injection conduit corresponding to the vent hole in the battery cell; and
a sealing part blocking the injection hole, a melting point of the sealing part being lower than a melting point of the injection conduit.

3. The battery pack fire extinguishing system as claimed in claim 2, wherein the sealing part is configured to be melted by the vent gas of the battery cell.

4. The battery pack fire extinguishing system as claimed in any one of claims 1 to 3, wherein the refrigerant comprises a nonflammable, flame-retardant, or fire-extinguishing refrigerant.

5. The battery pack fire extinguishing system as claimed in any one of claims 1 to 4, further comprising a second battery cell below the evaporator,
wherein the evaporator comprises a second refrigerant injector configured to melt when a vent gas is discharged from a vent hole in the second battery cell to inject the refrigerant into the second battery cell.

6. The battery pack fire extinguishing system as claimed in claim 5, wherein the second refrigerant injector comprises:
a second injection hole in a region of the evaporator corresponding to the vent hole in the second battery cell; and
a second sealing part blocking the second injection hole, a melting point of the second sealing part being lower than a melting point of the evaporator.

7. The battery pack fire extinguishing system as claimed in claim 6, wherein the second sealing part is configured to be melted by the vent gas of the second battery cell.

8. The battery pack fire extinguishing system as claimed in any one of claims 1 to 7, further comprising:
a temperature sensor for sensing a temperature of the battery cell;
a control unit configured to receive temperature information of the battery cell from the temperature sensor; and
a valve in the second conduit between the refrigerant injector and the evaporator and configured to be opened or closed by a control signal from the control unit,
wherein, when it is determined that the temperature of the battery cell is higher than a reference value, the control unit is configured to close the valve.

9. The battery pack fire extinguishing system as claimed in claim 8, wherein, when it is determined that the temperature of the battery cell is higher than the reference value, the control unit is configured to increase a motor rotation speed of the compressor.
